# EUROPÄISCHE PATENTSCHRIFT

(11) **EP 4 374 064 B1**
(45) Veröffentlichungstag und Bekanntmachung des Hinweises auf die Patenterteilung: **09.04.2025**
(21) Anmeldenummer: 22751396.7
(22) Anmeldetag: 20.07.2022
(51) Int. Cl.: F03D 3/02, F03D 3/06, F03D 7/06, F03B 17/06

(54) **STRÖMUNGSKRAFTANLAGE MIT SCHWENKFLÜGELN**
FLUID DRIVEN MACHINE COMPRISING PIVOTABLE BLADES
MACHINE À FLUIDE COMPRENANT DES PALES PIVOTANTES

(30) Priorität: 22.07.2021 DE 102021118953
(43) Veröffentlichungstag der Anmeldung: 29.05.2024
(73) Patentinhaber: Carstens, Bahne, 37120 Bovenden (DE)
(72) Erfinder: Carstens, Bahne, 37120 Bovenden (DE)
(74) Vertreter: REHBERG HÜPPE + PARTNER
(86) Internationale Anmeldenummer: PCT/EP2022/070287
(87) Internationale Veröffentlichungsnummer: WO 2023/001864

(56) Entgegenhaltungen:
- DE-A1- 19 718 048
- US-A1- 2011 305 569

## Beschreibung

### TECHNISCHES GEBIET DER ERFINDUNG

Die Erfindung bezieht sich auf eine Strömungskraftanlage mit einem Rotor und mehreren verschwenkbar an dem Rotor gelagerten Schwenkflügeln. Insbesondere bezieht sich die Erfindung auf eine Strömungskraftanlage mit den Merkmalen des Oberbegriffs des unabhängigen Patentanspruchs 1.

Eine Strömungskraftanlage dient dazu, einer sie anströmenden Strömung Energie zu entziehen, um diese Energie nutzbar zu machen, insbesondere indem die Strömungskraftanlage die der Strömung entzogene kinetische Energie in elektrische Energie umwandelt.

Die die Strömungskraftanlage anströmende Strömung kann grundsätzlich eine Strömung jedweden Fluids sein. Von besonderem praktischem Interesse sind Luft- und Wasserströmungen. Mit anderen Worten kann die Strömungskraftanlage insbesondere eine Windkraftanlage oder Wasserkraftanlage sein.

### STAND DER TECHNIK

Bei einer sogenannten chinesische Windmühle oder chinesische Windturbine, siehe zum Beispiel https://de.wikipedia.org/wiki/Klappfl%C3%BCgel-Rotor#/media/Datei:Klapprotor_13.gif, handelt es sich um eine Ausführungsform eines sogenannten Klappflügel-Rotor mit zur Drehachse des Rotors parallelen Schwenkachsen mehrerer Klappflügel. Die Klappflügel richten sich gegenüber der anströmenden Strömung selbsttätig auf einer vorlaufenden Seite des Rotors quer zu der Strömung und auf einer rücklaufenden Seite des Rotors in Richtung der Strömung aus. Eine aktive Flügelverstellung erfolgt nicht. Insbesondere bei höherer Drehzahl des Rotors besteht die Gefahr, dass sich die Klappflügel unkontrolliert aus ihrer Sollstellung verschwenken.

Bei einem bekannten Rotor mit von einer anströmenden Strömung verschwenkten Schwenkflügeln, siehe https://de.wikipedia.org/wiki/Klappfl%C3%BCgel-Rotor#/media/ Datei:Klapprotor_13.gif, wird der maximale Öffnungswinkel der aus dem Grundkörper des Rotors heraus geschwenkten Schwenkflügel abhängig von der Geschwindigkeit der Strömung begrenzt. Die Begrenzung des Öffnungswinkels erfolgt mit Hilfe einer von der Strömung angeströmten Steuerklappe, die an Steuerseilen zieht, wenn sie von der Strömung angehoben wird.

Die Flügel eines Voith-Schneider-Propellers sind um zueinander parallele Schwenkachsen verschwenkbar am Außenumfang eines Rotors gelagert, der um eine zu den Schwenkachsen parallele Drehachse umläuft. Schwenkwinkel der Flügel um ihre Schwenkachsen werden durch einen Mechanismus zwangsgesteuert, so dass die Schwenkwinkel gegenüber dem Rotor abhängig von dem Drehwinkel des Rotors variieren. Mit einem angetriebenen Voith-Schneider-Propeller wird ein Schub quer zu der Drehachse des Rotors erzeugt. Grundsätzlich wäre ein Voith-Schneider-Propeller auch als Turbine einer Strömungskraftanlage verwendbar. Im Gegensatz zu üblichen Strömungskraftanlagen mit quer zur Strömung verlaufender Drehachse des Rotors müsste ein Voith-Schneider-Propeller jedoch in die Strömung gedreht werden. Praktische Anwendungen von Voith-Schneider-Propellern als Turbinen von Strömungskraftanlagen sind nicht bekannt.

Der Savonius-Rotor ist eine Windturbine mit zwei oder mehr schaufelförmigen, einander überlappenden Flügeln, die entlang einer Drehachse gestreckt zwischen kreisförmigen Endscheiben montiert sind. Mit vertikaler Drehachse wird ein Savonius-Rotor unabhängig von der Windrichtung von einer anströmenden Luftströmung in Rotation um seine Drehachse versetzt. Ein Savonius-Rotor ist zwar mit einfachen Mitteln zu bauen. Der auf den Gesamtkonstruktionsaufwand bezogene Wirkungsgrad von Strömungskraftanlagen mit Savonius-Rotoren ist aber nicht hoch genug, dass sich der Bau solcher Strömungskraftanlagen im Vergleich zu anderen Windkraftanlagen lohnen würde.

Beim Darrieus-Rotor handelt es sich um eine Windturbine für Windkraftanlagen mit vertikaler Drehachse. Um die Drehachse umlaufende Flügel eines Darrieus-Rotors sind grundsätzlich fest gegenüber dem Umfang des Rotors angeordnet. Bei einem quer zu seiner Drehachse angeströmten Darrieus-Rotor mit zwei Flügeln ergeben sich einander entgegengesetzte aerodynamische Kräfte auf die Flügel. Ein Darrieus-Rotor läuft daher nicht von alleine an. Wenn er angelaufen wird, beispielsweise mit Hilfe eines starr gekoppelten Savonius-Rotors, werden die Flügel unterschiedlich angeströmt. Hieraus resultieren dann unterschiedliche aerodynamische Kräfte und ein Drehmoment auf den Rotor. Es ist bekannt, dass eine windrichtungsgeführte Blattwinkelverstellung das Anlaufverhalten und den Wirkungsgrad von Darrieus-Rotoren verbessern kann.

Aus der DE 197 18 048 A1 ist eine als Windmotor-Libelle bezeichnete Windkraftanlage mit einem Rotor und einem Gehäuse bekannt. In dem Gehäuse ist ein Rotor mit Innenring und mit mehreren schwenkbaren Windflügeln in einem ersten Mittelpunkt, eine kreisförmige Kurvenbahn zur Führung der Windflügel in einem zweiten Mittelpunkt sowie ein Windleitblech an der Gehäusewand in Richtung der sich verengenden Überschneidung von Innenring und Kurvenbahn angeordnet. Die Windflügel sind am Innenring schwenkbar gelagert und werden wie Schlepphebel in der Kurvenbahn geführt. Die am Innenring schwenkbar gelagerten Windflügel stellen sich voll in den Wind. In einem gemeinsamen Gehäuse mit innen- oder außenliegenden Windleitblechen können auch zwei solcher Windmotor-Libellen mit um parallele Drehachsen umlaufenden Rotoren angeordnet sein.

Eine Strömungskraftanlage mit einem Rotor und mehreren verschwenkbar an dem Rotor gelagerten Schwenkflügeln ist aus der JP 2013-139741 A bekannt. Schwenkwinkel der mehreren Schwenkflügel sind gemeinsam durch Verdrehen eines Stellrings mit einem elektrischen Antrieb gegenüber dem Rotor einstellbar. Der Stellring wird mit dem elektrischen Antrieb gegenüber dem Rotor um die Drehachse verdreht und wirkt über an ihn und an die Schwenkflügel angelenkte Lenker auf die Schwenkflügel ein. Bei der bekannten Strömungskraftanlage werden die Schwenkflügel während des Umlaufens des Rotors nicht zwischen ihrer zu der Drehachse hin eingeschwenkten Stellung und ihrer von der Drehachse weg ausgeschwenkten Stellung gegenüber dem Rotor verschwenkt, sondern alle Schwenkflügel weisen konstant den mit Hilfe des elektrischen Antriebs, dem Stellring und den Lenkern eingestellten Schwenkwinkel gegenüber dem Rotor auf.

Eine Strömungskraftanlage mit den Merkmalen des Oberbegriffs des unabhängigen Patentanspruchs 1 ist aus der US 2011/0305569 A1 bekannt.

### AUFGABE DER ERFINDUNG

Der Erfindung liegt die Aufgabe zugrunde, eine Strömungskraftanlage mit einem Rotor und mindestens einem verschwenkbar an dem Rotor gelagerten Schwenkflügel aufzuzeigen, deren Betrieb, insbesondere mit dem Ziel einer maximalen Energieausbeute automatisch optimierbar ist.

### LÖSUNG

Die Aufgabe der Erfindung wird durch eine Strömungskraftanlage mit den Merkmalen des Patentanspruchs 1 gelöst. Bevorzugte Ausführungsformen der erfindungsgemäßen Strömungskraftanlage sind in den abhängigen Patentansprüchen definiert.

### BESCHREIBUNG DER ERFINDUNG

Bei einer erfindungsgemäßen Strömungskraftanlage mit einem um eine Drehachse drehbar gelagerten Rotor und mehreren Schwenkflügeln, die jeweils um eine zu der Drehachse parallele Schwenkachse zwischen einer in den Rotor eingeschwenkten Stellung und einer von der Drehachse weg aus dem Rotor ausgeschwenkten Stellung verschwenkbar an dem Rotor gelagert sind, ist jedem Schwenkflügel eine separate elektrische Maschine zugeordnet, die dazu ausgebildet und angeordnet ist, Drehmomente um die Schwenkachse zwischen dem Rotor und dem jeweiligen Schwenkflügel aufzubringen, und ist eine die elektrischen Maschine ansteuernde Steuerung für einen Schwenkwinkel des jeweiligen Schwenkflügels um die Schwenkachse gegenüber dem Rotor dazu ausgebildet und angeschlossen ist, die elektrische Maschine während jedes Umlaufs des jeweiligen Schwenkflügels mit dem Rotor um die Drehachse so anzusteuern, dass ein für den jeweiligen Umlauf vorgegebener Verlauf seines Schwenkwinkels um seine Schwenkachse gegenüber dem Rotor resultiert.

Dass eine elektrische Maschine dazu ausgebildet ist, Drehmomente um die Schwenkachse zwischen dem Rotor und dem jeweiligen Schwenkflügel aufzubringen, bedeutet nicht nur, dass für die mehreren Schwenkflügel mehrere elektrische Maschinen vorhanden sind, sondern auch, dass diese mehreren elektrischen Maschinen unabhängig voneinander von der Steuerung ansteuerbar sind. Weiterhin bedeutet, dass die elektrische Maschine dazu ausgebildet ist, Drehmomente um die Schwenkachse zwischen dem Rotor und dem jeweiligen Schwenkflügel aufzubringen, dass das Verschwenken des jeweiligen Schwenkflügels um seine Schwenkachse nicht nur von diesen Drehmomenten, sondern auch von weiteren zwischen dem Rotor und dem jeweiligen Schwenkflügel um die Drehachse wirksamen Kräften und Momenten abhängt. Hierzu zählen insbesondere aerodynamische Kräfte auf den Drehflügel infolge seiner Anströmung durch eine externe Strömung. Hierzu zählen weiterhin Zentrifugalkräfte auf den Schwenkflügel, Reibungskräfte und etwaige elastische Kräften, die zwischen dem jeweiligen Schwenkflügel und dem Rotor wirksam werden. Die elektrische Maschine wird von der Steuerung so angesteuert, dass die Summe der zwischen dem Rotor und dem jeweiligen Schwenkflügel wirksamen Drehmomente in der die Strömungskraftanlage anströmenden Strömung genau in den Verlauf des Schwenkwinkels des jeweiligen Schwenkflügels resultiert, der für den jeweiligen Umlauf des jeweiligen Schwenkflügels mit dem Rotor um die Drehachse vorgesehen ist. Anders gesagt wird bei der erfindungsgemäßen Strömungskraftanlage das bei dem bekannten Rotor mit Schwenkflügeln erfolgende passive Verschwenken der Schwenkflügel durch die anströmende Strömung nicht durch ein aktives Verschwenken des jeweiligen Schwenkflügels ersetzt. Die elektrische Maschine wird vielmehr dazu verwendet, dass durch die anströmende Strömung induzierte Verschwenken so zu modifizieren, dass der für den jeweiligen Umlauf des Schwenkflügels vorgesehene Verlauf des Schwenkwinkels des jeweiligen Schwenkflügels realisiert wird. Dies schließt insbesondere ein, dass mit Hilfe der elektrischen Maschine ein unkontrolliertes Verschwenken des jeweiligen Schwenkflügels um seine Schwenkachse unterdrückt wird. Weiterhin kann verhindert werden, dass der jeweilige Schwenkflügel hart an dem Rotor anschlägt, wenn er seine ausgeschwenkte Stellung oder seine eingeschwenkte Stellung erreicht. Insbesondere kann die elektrische Maschine dazu genutzt werden, das Ausschwenken des Schwenkflügels in seine ausgeschwenkte Stellung schon eher einzuleiten, als es durch die anströmende Strömung induziert würde. Ebenso kann das Einschwenken des jeweiligen Schwenkflügels mit Hilfe der elektrischen Maschine schon eher eingeleitet werden, als es durch die anströmende Strömung induziert würde. Letzteres kann speziell in einer den Rotor in der anströmenden Strömung weiter beschleunigenden Art und Weise geschehen, wie unten noch näher erläutert werden wird.

Wie bereits die voranstehenden Ausführungen deutlich machen, kommt es bei dem Verlauf des Schwenkwinkels des jeweiligen Schwenkflügels um seine Schwenkachse nicht allein auf die jeweilige Größe des Schwenkwinkels bei der jeweiligen Lage der Schwenkachse des Schwenkflügels um die Drehachse des Rotors an, sondern auch auf die dabei erreichten Schwenkwinkelgeschwindigkeiten des Schwenkflügels, d. h. die Ableitungen des Schwenkwinkels nach der Zeit.

Anders gesagt kann die Steuerung auch dazu ausgebildet sein, für den jeweiligen Umlauf des Rotors um die Drehachse einen vorgegebenen Verlauf einer Schwenkwinkelgeschwindigkeit des jeweiligen Schwenkflügels zu realisieren. Das Ansteuern der elektrischen Maschine durch die Steuerung erfolgt durch Beaufschlagen der elektrischen Maschine mit elektrischen Strömen unterschiedlicher Stromstärke. Diese elektrischen Ströme sind es, mit denen die Drehmomente um die Schwenkachse oder Kräfte aufgebracht werden, welche mit einem Hebelarm um die Drehachse als Drehmomente wirken.

Mit der einen elektrischen Maschine je Schwenkflügel und der diese ansteuernden Steuerung wird die Grundlage für einen automatisch optimierbaren Betrieb der Strömungskraftanlage geschaffen, insbesondere im Hinblick auf eine maximale Ausbeute an Energie aus der sie anströmenden Strömung. So wird erreicht, dass viel elektrische Energie bei kleiner Baugröße erwirtschaftet wird. Daher kann die erfindungsgemäße Strömungskraftanlage beispielsweise in einem Garten aufgestellt werden, wo man keine Anlage haben möchte, die großräumig um sich schlagen. Mit der ihrer Bauhöhe gewinnt die erfindungsgemäße Strömungskraftanlage an Effektivität, ohne mehr Standfläche zu benötigen.

Eine automatische Optimierung der Steuerung im laufenden Betrieb der Strömungskraftanlage kann beispielsweise auf Machine Learning basieren oder sonstwie mit Hilfe künstlicher Intelligenz erfolgen.

Vorzugsweise ist jeder Schwenkflügel der erfindungsgemäßen Strömungskraftanlage in seiner eingeschwenkten Stellung in einer als Rotationskörper um die Drehachse ausgebildeten Grundform des Rotors angeordnet. Dabei kann der eingeschwenkte Schwenkflügel einen Teil dieser Grundform des Rotors ausbilden. Diese Grundform kann ein Zylinderabschnitt mit einer mit der Drehachse des Rotors zusammenfallenden Zylinderachse sein. Die Grundform kann aber auch tonnenförmig sein oder eine anderweitig gekrümmte oder geknickte Mantellinie aufweisen.

Das Verschwenken der Schwenkflügel über ihrem jeweiligen Umlauf um die Rotationsachse kann auf Grundlage aktueller Werte externer Parameter wie der Geschwindigkeit und der Richtung der anströmenden Strömung vorgegeben werden und dazu anhand der Werte dieser Parameter aus einer Tabelle ausgelesen werden. Die Steuerung kann aber auch dazu ausgebildet sein, das Verschwenken der Schwenkflügel automatisch zu optimieren. Zum Zwecke dieser Optimierung kann die Steuerung den Verlauf des Schwenkwinkels probeweise unterschiedlich vorgeben. Zum Beispiel können die Winkelstellungen der Schwenkachsen der Schwenkflügel um die Drehachse des Rotors bezogen auf die Richtung der anströmenden Strömung variiert werden, bei denen das Ausschwenken und das Einschwenkens der Schwenkflügel begonnen werden. Ebenso können der maximale Schwenkwinkel und der Verlauf einer Schwenkwinkelgeschwindigkeit der Schwenkflügel gegenüber dem Rotor variiert werden. Dazu können dann sowohl die während des jeweiligen Umlaufs vorliegenden Werte der externen Parameter als auch die zum Realisieren der Schwenkwinkel und Schwenkwinkelgeschwindigkeiten der Schwenkflügel benötigten elektrischen Ströme in den elektrischen Maschinen als auch die während des jeweiligen Umlauf aus der anströmenden Strömung auf den Rotor übertragene kinetische Energie und die für den jeweiligen Umlauf benötigte Zeit notiert werden. Eine Auswertung dieser Daten über viele Umläufe der Schwenkflügel mit unterschiedlichem Verlauf ihrer Schwenkwinkel gegenüber dem Rotor erlaubt es, diesen Verlauf mit dem Ziel einer maximalen Übertragung von Energie aus der anströmenden Strömung zu optimieren und dann entsprechend für den nächsten Umlauf bei denselben Werten der externen Parameter vorzugeben. Die während vorheriger Umläufe der Schwenkflügel um die Drehachse gewonnenen Daten können Labordaten sein, die während der Entwicklung der erfindungsgemäßen Strömungskraftanlage gewonnen wurden, und/oder Daten aus dem laufenden Betrieb der erfindungsgemäßen Strömungskraftanlage.

Das Ansteuern der separaten elektrischen Maschinen der erfindungsgemäßen Strömungskraftanlage kann zusätzlich auch so erfolgen, dass auftretende Schwingungen, insbesondere Resonanzen mit der Drehfrequenz oder einer Harmonischen der Drehfrequenz des Rotors unterdrückt oder zumindest abgemindert werden. Dazu kann die Steuerung an einen Schwingungssensor der Strömungskraftanlage angeschlossen und dazu ausgebildet sein, die separaten elektrischen Maschinen derart unterschiedlich anzusteuern, dass mit dem Schwingungssensor registrierte Schwingungen bei der Drehfrequenz oder der Harmonischen der Drehfrequenz des Rotors abgemindert werden. Die unterschiedliche Ansteuerung der elektrischen Maschinen kann bedeuten, dass die verschiedenen elektrischen Maschinen über denselben Umlauf des Rotors um seine Drehachse hinweg unterschiedlich angesteuert werden, woraus unterschiedliche Verläufe der Schwenkwinkel der einzelnen Drehflügel resultieren. Alternativ oder zusätzlich können die elektrischen Maschinen über aufeinanderfolgende Umläufe des Rotors um die Drehachse hinweg unterschiedlich angesteuert werden. Die Unterschiede in der Ansteuerung der separaten elektrischen Maschinen haben naturgemäß eine Variation des Wirkungsgrads der erfindungsgemäßen Strömungskraftanlage zur Folge. Wenn diese Variation jedoch um den maximalen Wirkungsgrad der Strömungskraftanlage herum erfolgt, sind die damit verbundenen Einbußen an Energieausbeute nur klein und ein kleiner Preis für die Abminderung der Schwingungen, die nicht nur mit erhöhten Betriebsgeräuschen der Strömungskraftanlage, sondern auch mit Beeinträchtigungen ihrer Lebensdauer oder im Falle einer sogenannten Resonanzkatastrophe sogar mit einer kurzfristigen Zerstörung der Strömungskraftanlage verbunden sein können. Die Steuerung der erfindungsgemäßen Strömungskraftanlage kann auch so ausgelegt sein, dass sie Drehzahlen des Rotors, bei denen Resonanzen auftreten, durch abgestimmte Ansteuerung der elektrischen Maschinen generell vermeidet. Dabei kann die Steuerung die aktuellen Werte der Parameter der die Strömungskraftanlage anströmenden Strömungen berücksichtigen, die die Neigung der Strömungskraftanlage zu Schwingungen bei einer bestimmten Drehzahl des Rotors beeinflussen. Die relevanten Parameter und deren Einfluss auf die Neigung der Strömungskraftanlage zu Schwingungen kann die Steuerung im laufenden Betrieb der Strömungskraftanlage mit Hilfe von Machine Learning erfassen. Durch fortlaufendes Beobachten dieser Parameter zusammen mit der Drehzahl des Rotors kann die Steuerung dann die Gefahr von Schwingungen und Resonanzen erkennen und beseitigen, schon bevor die Schwingungen und Resonanzen tatsächlich auftreten.

Auch ganz grundsätzlich kann die Optimierung der Steuerung in Bezug auf die Vermeidung von Schwingungen und Resonanzen mit Hilfe von Machine Learning im laufenden Betrieb der Strömungskraftanlage erfolgen.

Weiterhin kann die Steuerung der erfindungsgemäßen Strömungskraftanlage die Drehfrequenz oder Drehzahl des Rotors bei Starkwind dadurch begrenzen, dass sie den maximalen Schwenkwinkel der Schwenkflügel gegenüber dem Rotor begrenzt oder im Extremfall die Schwenkflügel in ihren vollständig eingeschwenkten Stellungen hält.

Grundsätzlich ist es möglich, aus Variationen der vorgegebenen Verläufe der Schwenkwinkel und den daraus resultierenden Variationen bei den auf den Rotor übertragenen Energien auf die aktuellen Werte der Parameter der die Strömungskraftanlage anströmenden Strömung zu schließen. Alternativ oder zusätzlich können die Werte der Parameter der die Strömungskraftanlage anströmenden Strömung separat mit einer hierfür üblichen Einrichtung erfasst werden. Die wesentlichen Parameter sind Richtung und Geschwindigkeit der die Strömungskraftanlage anströmenden Strömung.

Um Drehmomente um die Schwenkachsen der Schwenkflügel gegenüber dem Rotor in beliebiger Richtung aufbringen zu können, müssen die elektrischen Maschinen zumindest als Motor und als Bremse betreibbar sein. Erfindungsgemäß sind sie als Motor und als Generator betreibbar, so dass beim Abbremsen der Schwenkflügel elektrische Energie generiert wird. Alternativ können die elektrischen Maschinen jeweils einen Motor und einen davon elektrisch getrennten Generator umfassen. Diese Alternative soll in die nachfolgende Beschreibung grundsätzlich eingeschlossen sein. Auch um den Betrieb der elektrischen Maschinen als Generator zu vereinfachen, sind die elektrischen Maschinen in der Regel getriebelos. Die elektrischen Maschinen können rotierende elektrische Maschinen mit einem um die jeweilige Schwenkachse drehbar gelagerten Rotor sein. Die elektrischen Maschinen können aber auch einen an dem Rotor und dem jeweiligen Schwenkflügel gelenkig angreifenden Linearmotor aufweisen.

Wenn die elektrischen Maschinen auch als Generatoren betreibbar sind, kann ein an dem Rotor gelagerter und mit dem Rotor um die Drehachse umlaufende Energiepufferspeicher bei der erfindungsgemäßen Strömungskraftanlage dazu ausgebildet und angeschlossen sein, beim Betrieb der elektrischen Maschinen als Generator gewonnene elektrische Energie zwischen zu speichern. Wenn diese elektrische Energie dann im Mittel über mehrere Umläufe des Rotors beim Betrieb der elektrischen Maschinen als Motor wieder abgegeben wird, die aus dem Betrieb der elektrischen Maschinen als Generator gewonnene elektrische Energie zu ihrem Betrieb als Motor aber auch ausreicht, bedarf es keiner elektrischen Versorgung der mit dem Rotor um die Drehachse umlaufenden elektrischen Maschinen über Schleifkontakte oder dergleichen. Derartige Schleifkontakte oder dergleichen werden für die Steuerung und deren Ansteuern der elektrischen Maschinen nicht benötigt. Hierfür kann eine drahtlose Signalübertragung zwischen einem nicht mit umlaufenden Teil der Steuerung und einem mit dem Rotor und den elektrischen Maschinen um die Drehachse umlaufenden Teil der Steuerung erfolgen.

Ein Betrieb der elektrischen Maschinen als Generator, bei dem elektrische Energie gewonnen wird, kann insbesondere dann erfolgen, wenn das Ausschwenken des jeweiligen Schwenkflügels mit Hilfe der elektrischen Maschinen gegen die Einwirkung der anströmenden Strömung abgebremst wird. Als Motor können die elektrischen Maschinen insbesondere zum einen dann betrieben werden, wenn der jeweilige Schwenkflügel schon eher beginnen soll, auszuschwenken, als hierfür aerodynamische Kräfte aufgrund der den Rotor anströmenden Strömung bereit stehen. Zum anderen können die elektrischen Maschinen als Motor betrieben werden, um den jeweiligen Schwenkflügel wieder einzuschwenken, bevor aerodynamische Kräfte aufgrund der anströmenden Strömung dieses Einschwenken herbeiführen. Wenn aus dem Betrieb der elektrischen Maschinen als Generator noch mehr elektrische Energie zur Verfügung steht, als durch das Betreiben der elektrischen Maschinen als Motor zu diesen beiden Zwecken mindestens verbraucht wird, kann die Steuerung die elektrischen Maschine zum derartigen Verschwenken des jeweiligen Schwenkflügels aus seiner ausgeschwenkten Stellung in seine eingeschwenkte Stellung ansteuern, dass der Rotor durch eine resultierende Ruderbewegung des jeweiligen Schwenkflügels in der ihn anströmenden Strömung beschleunigt wird. So erfolgt eine Übertragung von Energie aus dem an dem Rotor angeordneten Energiepufferspeicher in Form von kinetischer Energie auf den Rotor. Die im Betrieb der elektrischen Maschinen als Generator gewonnene elektrische Energie wird also vorzugsweise in dem Energiepufferspeicher zwischengespeichert und im Betrieb der elektrischen Maschinen als Generator wieder vollständig verbraucht. Um dabei mehr elektrische Energie für die Ruderbewegung der Schwenkflügel zur Verfügung zu haben, kann das Ausschwenken der Schwenkflügel, das mit Hilfe der als Generator betriebenen elektrischen Maschinen gegen die Einwirkung der anströmenden Strömung abgebremst wird, bis zu deutlich größeren Schwenkwinkeln der Schwenkflügel erfolgen, als sie erforderlich wären, um die Schwenkflügel quer zu der anströmenden Strömung auszurichten.

Zusätzlich kann an dem Rotor der erfindungsgemäßen Strömungskraftanlage ein Elektromotor gelagert sein, mit dem Drehmomente um die Drehachse zwischen dem Rotor und einer drehfesten Basis aufbringbar sind. Wenn die Steuerung den Elektromotor mit elektrischer Energie aus dem Energiepufferspeicher betreibt, kann dadurch jedwede elektrische Energie aus dem Energiezwischenpuffer in Form von kinetischer Energie auf den Rotor übertragen werden. Weiterhin kann der Elektromotor genutzt werden, um die Strömungskraftanlage sicher anlaufen zu lassen, selbst wenn sie nur über zwei achsensymmetrisch zu der Drehachse des Rotors angeordnete Schwenkflügel verfügt. Der Elektromotor ist so auszubilden, dass er im Leerlauf ohne Übertrag von Drehmomenten um die Drehachse den Drehungen des Rotors um die Drehachse einen möglichst kleinen Widerstand entgegensetzt und keinen Leerlaufenergiebedarf hat. Wenn der Elektromotor auch als Generator betreibbar ist, kann mit seiner Hilfe der Energiezwischenpuffer aufgeladen werden, wenn das Verschwenken der Drehflügel mit den elektrischen Maschinen mehr Energie kostet als einbringt.

Wenn der Rotor mechanisch an einen Hauptgenerator der Strömungskraftanlage angeschlossen ist, wird diese zusätzliche kinetische Energie des Rotors durch den Hauptgenerator wieder in elektrische Energie umgewandelt. Der Transfer der elektrischen Energie, die auf dem sich drehenden Rotor generiert wurde, auf diesem kinetischen Wege zu der drehfesten Basis bedarf keinerlei elektrischer Schleifkontakte oder dergleichen. Der Hauptgenerator der Strömungskraftanlage kann an einen elektrischen Verbraucher und/oder einen Energiespeicher für elektrische Energie angeschlossen oder anschließbar sein.

Die automatische Optimierung des Betriebs der erfindungsgemäßen Strömungskraftanlage muss keine gleichmäßige Winkelgeschwindigkeit des Rotors bei seinen Drehungen um die Drehachse zur Folge haben. Dann schwankt auch die pro Zeiteinheit von dem Hauptgenerator der Strömungskraftanlage ausgegebene elektrische Energie, d. h. seine elektrische Leistung, über jeden Umlauf des Rotors um seine Drehachse. Diese Schwankungen muss der jeweilige an den Hauptgenerator angeschlossene Verbraucher tolerieren können, oder diese Schwankungen sind mit Hilfe eines geeigneten Energiespeichers, wie beispielsweise eines Pufferkondensators, zu nivellieren.

Die Steuerung der erfindungsgemäßen Strömungskraftanlage ist vorzugsweise ausgebildet und angeschlossen, eine von dem Hauptgenerator der Strömungskraftanlage an den Verbraucher und/oder den Energiespeicher abgegebene elektrische Leistung zu erfassen. Diese elektrische Leistung ist die pro Zeiteinheit mit der Strömungskraftanlage aus der den Rotor anströmenden Strömung entnommene Energie und dient als Grundlage für die automatische Optimierung des Verlaufs des Schwenkwinkels des mindestens einen Schwenkflügels durch die Steuerung der erfindungsgemäßen Strömungskraftanlage.

Die Steuerung kann zusätzlich dazu ausgebildet und angeschlossen sein, den Hauptgenerator anzusteuern, um mit ihm eine Winkelgeschwindigkeit des Rotors um die Drehachse zu optimieren. Auch diese Optimierung kann mit dem Ziel der maximalen Übertragung von Energie aus der Strömung auf den Rotor erfolgen. Um diese Optimierung zu bewirken, kann die Steuerung die von dem Hauptgenerator abfließenden Ströme, damit die elektrische Leistung und damit den Drehwiderstand, den der Hauptgenerator den Drehungen des Rotors entgegensetzt, und somit letztlich die Winkelgeschwindigkeit des Rotors um seine Drehachse variieren. Dabei kann es vorteilhaft sein, wenn der Hauptgenerator in seiner Wirkrichtung soweit umkehrbar ist, dass er auch als Drehantrieb für den Rotor verwendet werden kann. Ein Betrieb des Hauptgenerators als Motor kann auch genutzt werden, um die Strömungskraftanlage sicher anlaufen zu lassen, selbst wenn sie nur über zwei achsensymmetrisch zu der Drehachse des Rotors angeordnete Schwenkflügel verfügt. Bei drei oder mehr Schwenkflügeln läuft die erfindungsgemäße Strömungskraftanlage in der Regel allein in Folge der ihren Rotor anströmenden Strömung an, auch ohne Ansteuerung der den Schwenkflügeln zugeordneten elektrischen Maschinen durch die Steuerung, also auch ohne elektrische Versorgung der Steuerung. Für ein solches automatisches Anlaufen der erfindungsgemäßen Strömungskraftanlage reicht es vielfach aus, dass ihre Schwenkflügel beispielsweise mit Hilfe einer Feder etwas aus ihrer vollständig eingeschwenkten Schwenkstellung herausgedrückt werden, so dass sie infolge der Anströmung durch die Strömung weiter ausgeschwenkt werden. Da eine größere Anzahl an Schwenkflügeln bei der erfindungsgemäßen Strömungskraftanlage eine größere Anzahl an elektrischen Maschinen und daher einen hohen apparativen Aufwand bedeutet, weist eine erfindungsgemäße elektrische Maschine typischerweise nicht mehr als sechs Schwenkflügel auf.

Der Rotor der erfindungsgemäßen Strömungskraftanlage kann einen koaxial zu seiner Drehachse angeordneten Innenzylinder aufweisen, der zwischen zwei starr mit ihm verbundenen Endscheiben größeren Durchmessers als derjenige des Innenzylinders angeordnet ist. Zwischen diesen Endscheiben können dann die Schwenkflügel um ihre Schwenkachsen gegenüber dem Rotor verschwenkbar gelagert sein. Neben dem Innenzylinder kann der Rotor mehrere starr mit dem Innenzylinder verbundene und um diesen herum angeordnete Strömungskörper mit in Drehrichtung des Rotors um die Drehachse gewandten Vorderseiten und der Drehrichtung abgewandten Rückseiten aufweisen, die als starre Flügel des Rotors wirksam sind. Dies bedeutet, dass der Rotor auch ohne die Schwenkflügel bei Anströmung quer zu seiner Drehachse aufgrund aerodynamischer Kräfte in Rotation versetzt wird. Die Schwenkachsen der Schwenkflügel verlaufen dann vorzugsweise im Bereich von bezüglich der Drehachse radial außenliegenden Hinterkanten der Strömungskörper und parallel zu diesen. Anders gesagt schließen die Schwenkflügel in Bezug auf die Drehrichtung des Rotors um seine Drehachse hinten an die Strömungskörper an. Dabei verbleiben vorzugsweise keine größeren Öffnungen zwischen den Hinterkanten der Strömungskörper und den Schwenkflügeln. Hingegen können die Schwenkflügel auch in ihren zu der Rotationsachse hin eingeschwenkten Stellungen in Umfangsrichtung um die Drehachse in Abständen von mindestens 10° vor den Vorderseiten der folgenden Strömungskörper enden, so dass hier Öffnungen zwischen den Schwenkflügeln und den jeweils folgenden Strömungskörpern verbleiben. Diese Öffnungen können das Ausschwenken der Schwenkflügel infolge der Anströmung des Rotors in Querrichtung zu seiner Drehachse befördern, indem sie einen Teil der Anströmung in Kammern auf den Innenseiten der Schwenkflügel lenken. Die Strömungskörper dieser Ausführungsform der erfindungsgemäßen Strömungskraftanlage können Hohlprofilabschnitte sein.

In einer speziellen Ausführungsform weist die erfindungsgemäße Strömungskraftanlage zwei Rotoren mit Drehflügeln auf, die spiegelsymmetrisch zu einer Längsmittelebene eines Strömungskanals angeordnet sind und gegenläufig um ihre Drehachsen umlaufen. Die Drehachsen der beiden Rotoren verlaufen also parallel zueinander und typischerweise in einem solchen Abstand, dass die ausgeschwenkten Schwenkflügel an den gegenläufig um ihre Drehachsen umlaufenden Rotoren gerade nicht miteinander kollidieren. Dann wird der Strömungskanal durch Ausschwenken der Schwenkflügel in ihren ausgeschwenkten Stellungen zumindest überwiegend blockiert. Die Strömung kann dann nur noch unter Verdrehen der Rotoren mit den ausgeschwenkten Schwenkflügeln durch den Strömungskanal hindurchtreten. Der Strömungskanal kann durch Strömungsleitelemente definiert und/oder begrenzt sein. Bei Ausführungsform der erfindungsgemäßen Strömungskraftanlage mit zwei Rotoren kann die Steuerung die Drehbewegung der einzelnen Rotoren synchronisieren, beispielsweise um die ausgeschwenkten Schwenkflügel an den gegenläufig um ihre Drehachsen umlaufenden Rotoren jeweils gleichzeitig durch den Abstand der beiden Drehachsen zu bewegen.

Zur Erfassung des aktuellen Schwenkwinkels des jeweiligen Schwenkflügels um seine Schwenkachse gegenüber dem Rotor kann ein Winkelgeber vorgesehen sein. Ein weiterer Winkelgeber kann den Drehwinkel des Rotors um seine Drehachse gegenüber einer drehfesten Basis erfassen. Es ist auch möglich, den Schwenkwinkel des Schwenkflügels mit Hilfe eines integrierten Sensors der jeweiligen elektrischen Maschine und den Drehwinkel des Rotors mit Hilfe eines integrierten Sensors des Hauptgenerators zu erfassen, sofern diese Sensoren den Schwenk- bzw. Drehwinkel für den Betrieb der erfindungsgemäßen Strömungskraftanlage ausreichend genau erfassen.

Zum Erfassen der elektrischen Ströme, mit denen die Steuerung die elektrischen Maschinen zum Aufbringen des Drehmoments zwischen den Schwenkflügeln und dem Rotor ansteuert, und auch zum Erfassen von elektrischen Strömen in dem Hauptgenerator können spezielle Stromsensoren vorgesehen sein, soweit die Steuerung diese Ströme nicht anderweitig erfassen kann, weil sie sie selbst vorgibt oder weil sie auf entsprechende Sensoren des Hauptgenerators zugreifen kann.

Die Steuerung der erfindungsgemäßen Strömungskraftanlage steuert die Ströme in den elektrischen Maschinen und von dem Hauptgenerator vorzugsweise digital. Die Ströme können durch eine Schaltmatrix in z. B. 256 gleichen Stufen eingestellt werden. Indem der Strom, der von dem Hauptgenerator fließt, digital gesteuert wird, liefert die erfindungsgemäße Strömungskraftanlage nicht so viel Strom, wie der Verbraucher nachfragt, sondern es wird so viel Strom geliefert, wie es der optimierte Betrieb der erfindungsgemäßen Strömungskraftanlage erfordert. Während jedes Umlaufs des Rotors um seine Drehachse kann es mehrere Zeitpunkte geben, zu denen kein Strom von dem Hauptgenerator fließt, d. h. vorübergehend keine elektrische Leistung bereitgestellt wird.

Die erfindungsgemäße Strömungskraftanlage erlaubt ein komplettes Energiemanagement sowohl in Bezug auf die Übertragung von kinetischer Energie aus der anströmenden Strömung auf die Schwenkflügel als auch zwischen den Schwenkflügeln und dem Rotor als auch von dem Rotor auf den Hauptgenerator. Gleichzeitig wird die elektrische Energie kontrolliert, die die elektrischen Maschinen, mit denen die Schwenkflügel um ihre Schwenkachsen gegenüber dem Rotor verschwenkt werden, als Motoren angetrieben werden oder die diese als Generatoren generieren. Weiterhin wird auch die elektrische Energie aus dem Energiepufferspeicher, die gegebenenfalls über den Elektromotor transferiert wird, kontrolliert. Ebenso kontrolliert die Steuerung die von der Strömungskraftanlage abgeführt elektrische Energie. Dies alles erfolgt mit dem Ziel einer Maximierung der Ausbeute an Energie aus der die Strömungskraftanlage anströmenden Strömung.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine perspektivische Ansicht einer Ausführungsform der erfindungsgemäßen Strömungskraftanlage ausgeführt als Windkraftanlage, wobei aerodynamische Verkleidungen von Teilen der Windkraftanlage weggelassen sind.
- **Fig. 2**: ist eine Ansicht eines unteren Bereichs der Windkraftanlage gemäß Fig. 1 aus einer anderen Blickrichtung als in Fig. 1.
- **Fig. 3 bis 7**: zeigen das Ausschwenken und Wiedereinschwenken eines Schwenkflügels gegenüber einem sich drehenden Rotor der Windkraftanlage gemäß den Fig. 1 und 2.
- **Fig. 8**: zeigt ein Detail einer weiteren Ausführungsform der erfindungsgemäßen Strömungskraftanlage ausgeführt als Wasserkraftanlage.
- **Fig. 9**: zeigt eine Ausführungsform der erfindungsgemäßen Strömungskraftanlage mit zwei spiegelbildlich angeordneten und gegenläufig rotierenden Rotoren und
- **Fig. 10**: zeigt in einer Fig. 3 entsprechenden Ansicht eine weitere Ausführungsform der erfindungsgemäßen Strömungskraftanlage, deren Rotor zusätzliche, als starre Flügel wirksame Strömungskörper aufweist.

### FIGURENBESCHREIBUNG

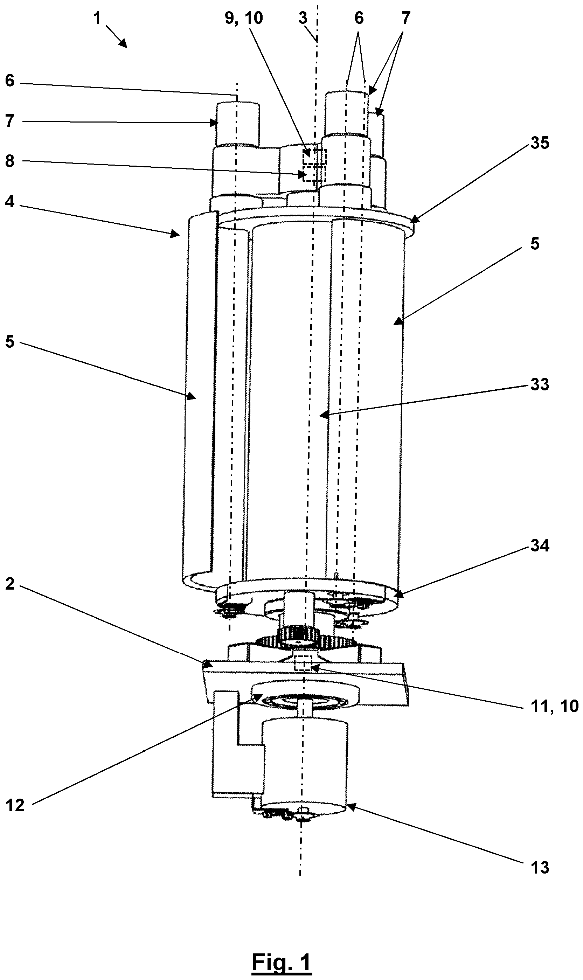

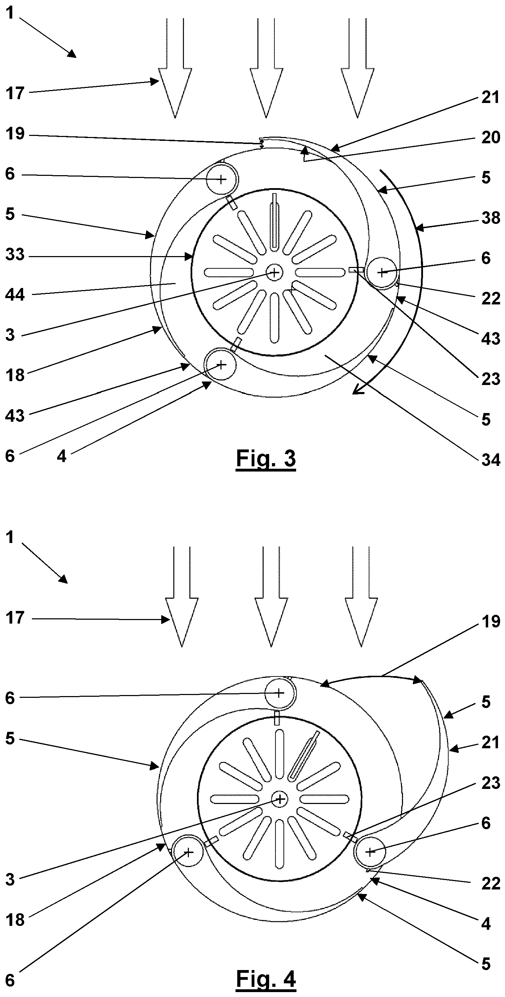

Die in **Fig. 1** dargestellte Strömungskraftanlage 1 weist einen an einer Basis 2 um eine vertikale Drehachse 3 drehbar gelagerten Rotor 4 auf. An dem Rotor 4 sind drei Schwenkflügel 5 um parallel zu der Drehachse 3 verlaufende Schwenkachsen 6 verschwenkbar gelagert. Die Schwenkachsen 6 sind im Abstand zu der Drehachse 3 rotationssymmetrisch zu der Drehachse 3 angeordnet. Für jeden Schwenkflügel 5 ist eine elektrische Maschine 7 auf dem Rotor 4 angeordnet, um Drehmomente um die jeweilige Schwenkachse 6 zwischen dem jeweiligen Schwenkflügel 5 und dem Rotor 4 aufzubringen. Weiterhin sind auf dem Rotor 4 ein hier nur schematisch wiedergegebener Energiepufferspeicher 8 und ein Teil 9 einer hier ebenfalls nur schematisch wiedergegebenen Steuerung 10 angeordnet. Ein weiterer Teil 11 der Steuerung 10 ist an der Basis 2 angeordnet. Eine Kommunikation zwischen den Teilen 9 und 11 der Steuerung 10 erfolgt drahtlos. In der Basis 2 ist der Rotor 4 über ein Drehlager 12 gelagert, das Kippmomente abstützt, welche bei angeströmtem Rotor 4 um quer zu der Drehachse 3 im Bereich der Basis 4 verlaufende Kippachsen auftreten. Über eine durchgehende Anschlusswelle 16 ist der Rotor 4 unterhalb der Basis 2 mechanisch an einen Hauptgenerator 13 der Strömungskraftanlage 1 angeschlossen. Die Steuerung 10 steuert die elektrischen Maschinen 7 unter Ausnutzung des Energiepufferspeichers 8 an, wie im Folgenden unter Bezugnahme auf die Fig. 3 bis 7 erläutert wird.

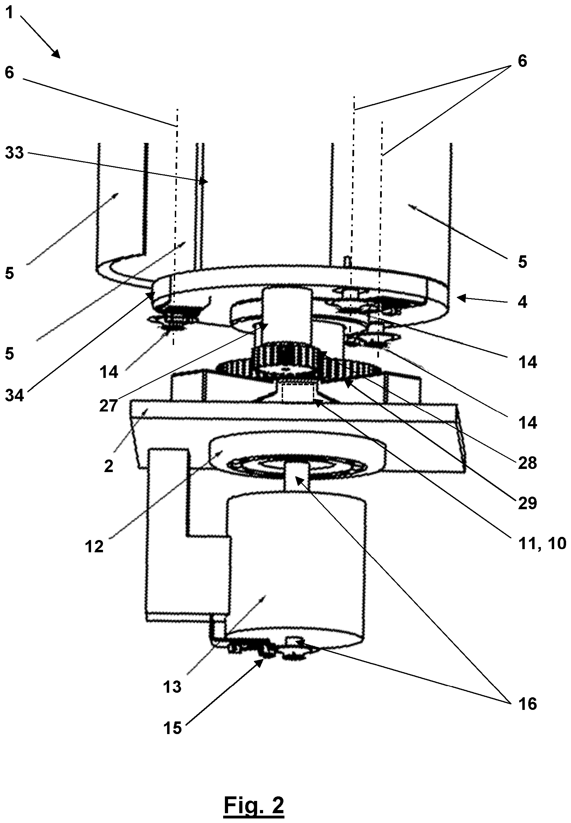

Die Steuerung 10 verwendet dabei u. a. die aktuellen Schwenkwinkel der Schwenkflügel 5 um deren Schwenkachsen 6 gegenüber dem Rotor 4 und den Drehwinkel des Rotors 4 um die Drehachse gegenüber der Basis 2. Diese Schwenkwinkel bzw. dieser Drehwinkel können mit Hilfe integrierter Sensoren der elektrischen Maschine 7 und des Hauptgenerators 13 erfasst werden. **Fig. 2** zeigt gesonderte Drehwinkelgeber 14 für die Schwenkwinkel der Schwenkflügel 5 und einen gesonderten Drehwinkelgeber 15 für den Drehwinkel des Rotors 4 bzw. der Anschlusswelle 16. Weiterhin ist ein an dem Rotor 4 gelagerter Elektromotor 27 gezeigt, der mit einem Ritzel 28 in einen drehfest an der Basis 2 gelagerten Zahnkranz 29 eingreift. Normalerweise befindet sich der Elektromotor 27 im Leerlauf und setzt der Drehbewegung des Rotors 4 um die Drehachse 3 einen möglichst kleinen Widerstand entgegen. Die Steuerung 10 kann den Motor 27 mit elektrischer Energie aus dem Energiepufferspeicher 8 betreiben, um den Rotor 4 zusätzlich zu aerodynamischen Kräften auf seine Schwenkflügel 5 um die Drehachse 3 gegenüber der Basis 2 drehanzutreiben. Dadurch wird die elektrische Energie aus dem Energiepufferspeicher 8 in kinetische Energie des Rotors 4 umgewandelt, welche der Hauptgenerator 13 wieder in elektrische Energie umwandelt. Mit Hilfe des Elektromotors 27 ist ein Transfer von elektrischer Energie von dem Energiepufferspeicher auf dem Rotor 4 auf den Hauptgenerator 13 an der Basis 2 ohne Schleifkontakte oder dergleichen möglich. Zudem kann durch einen Betrieb des Elektromotors 27 als Generator der Energiepufferspeicher 8 aus der Drehbewegung des Rotors 4 um die Drehachse 3 aufgeladen werden. Alternativ zu der bis hierher beschriebenen Parallelschaltung des Elektromotors 27 zu dem Hauptgenerator 13 zwischen dem Rotor 4 und der Basis 2 kann der Elektromotor 27 mechanisch in Reihe mit der Anschlusswelle 16 zwischen den Rotor 4 und den Hauptgenerator 13 geschaltet sein. Dazu ist der Rotor 4 getrennt von der Anschlusswelle 16 um seine Drehachse 3 drehbar an der Basis 2 zu lagern und der Zahnkranz 29 drehfest nicht an der Basis 2, sondern an der Anschlusswelle 16 zu befestigen. Weil dann das Drehmoment von dem Rotor 4 zu dem Hauptgenerator 13 über den Elektromotor 27 übertragen wird, ist dessen Ritzel 28 vorzugsweise für die Zeiten mechanisch blockierbar, in denen der Elektromotor kein zusätzliches Drehmoment zwischen dem Rotor 4 und der Anschlusswelle 16 aufbringt. Für das Ritzel 28 kann auch ein einseitiger mechanischer Freilauf an dem Rotor 4 ausgebildet sein, der das Ritzel 28 in eben diesen Zeiten mechanisch abstützt. In beiden Fällen muss der Elektromotor 27 nicht ständig bestromt werden. Ein einseitiger mechanischer Freilauf für das Ritzel 28 kann aber einem Betrieb des Elektromotors 27 als Generator zum Aufladen des Energiepufferspeichers 8 entgegenstehen. Bei der vollständigen Strömungskraftanlage 1 ist die Anordnung der Drehwinkelgeber 14, des Elektromotors 27 mit dem Ritzel 28 und des Zahnkranzes 29 an der Basis 2 ist ebenso wie das obere Ende des Rotors 4 gemäß Fig. 1 mit den elektrischen Maschinen 7 durch hier nicht dargestellte aerodynamische Verkleidungen abgedeckt.

Die in den Fig. 1 und 2 dargestellte Strömungskraftanlage 1 ist als Windkraftanlage mit vertikal ausgerichteter Drehachse 3 und nach oben von der Basis 2 abstehendem Rotor 4 ausgebildet. Entscheidend ist dabei nur eine Querausrichtung der Drehachse 3 zu einer anströmenden Strömung. Wenn eine Luftströmung aufgrund von Luftleitelementen immer in einer festen Richtung auftritt, kann die dazu quer verlaufende Drehachse 3 auch horizontal ausgerichtet sein.

Im Folgenden werden Richtungen um die Drehachse 3 des Rotors 4 durch die Uhrzeit angegeben, die ein um die Drehachse 3 umlaufender und in die jeweilige Richtung weisender Stundenzeiger einer herkömmlichen analogen 12 Stunden-Uhr anzeigen würde.

In **Fig. 3** ist durch Pfeile eine den Rotor 4 quer zu der Drehachse 3 aus 12 Uhr anströmende Strömung 17 angedeutet. Dabei zeigt Fig. 3 zwei der Schwenkflügel 5 in um ihre Schwenkachsen 6 vollständig in eine zylindrische Grundform 18 des Rotors 4 eingeschwenktem Zustand, der einem Schwenkwinkel der Schwenkflügel 5 gegenüber dem Rotor 4 von null entspricht. Ein Schwenkflügel 5, dessen Schwenkachse 6 in Fig. 3 bezogen auf die Anströmung des Rotors 4 durch die Strömung 17 aus 12 Uhr auf 3 Uhr steht, ist hingegen mit Hilfe der zugehörigen elektrischen Maschine bereits über einen kleinen Schwenkwinkel 19 etwas aus dem Rotor 4 heraus ausgeschwenkt. Dieses Ausschwenken ist noch nicht durch die den Rotor 4 anströmende Strömung 17 induziert, sondern ausschließlich eine Folge der Ansteuerung der zugehörigen elektrischen Maschine 7, um den Schwenkwinkel 19 des Schwenkflügels 5 entgegen der seine Außenseite 21 anströmenden Strömung 17 zu vergrößern. Durch dieses in Bezug auf die Anströmung durch die Strömung 17 frühe Ausschwenken des Schwenkflügels 5 wird der Schwenkflügel 5 sehr früh von der Strömung 17 auch auf seiner Innenseite 20 beaufschlagt, woraus ein nutzbares Drehmoment auf den Rotor 4 um die Drehachse 3 resultiert.

Aufgrund des mit Hilfe der zugehörigen elektrischen Maschine 7 bewirkten Ausschwenkens des Schwenkflügels 5 etwa der 3 Uhr-Stellung seiner Schwenkachse 6 wird der Schwenkflügel 5 also sehr früh von der Strömung 17 erfasst und weiter gegenüber dem Rotor 4 ausgeschwenkt, wie in **Fig. 4** zu sehen ist. Jetzt kann die elektrische Maschine 7 zum gezielten Abbremsen des weiteren Ausschwenkens des Schwenkflügels 5 unter Einwirkung der Strömung 17 verwendet werden, wobei sie als Generator betrieben wird, so dass sie elektrische Energie generiert. Diese elektrische Energie wird in den Energiepufferspeicher 8 eingespeist. Fig. 4 zeigt den teilweise ausgeschwenkten Schwenkflügel 5 bei Lage seiner Schwenkachse 6 auf 4 Uhr, noch bevor er so weit ausgeschwenkt ist, dass er im Wesentlichen quer zu der Strömung 17 orientiert ist und so ein maximaler Übertrag von kinetischer Energie aus der Strömung 17 auf den Rotor 4 erfolgt.

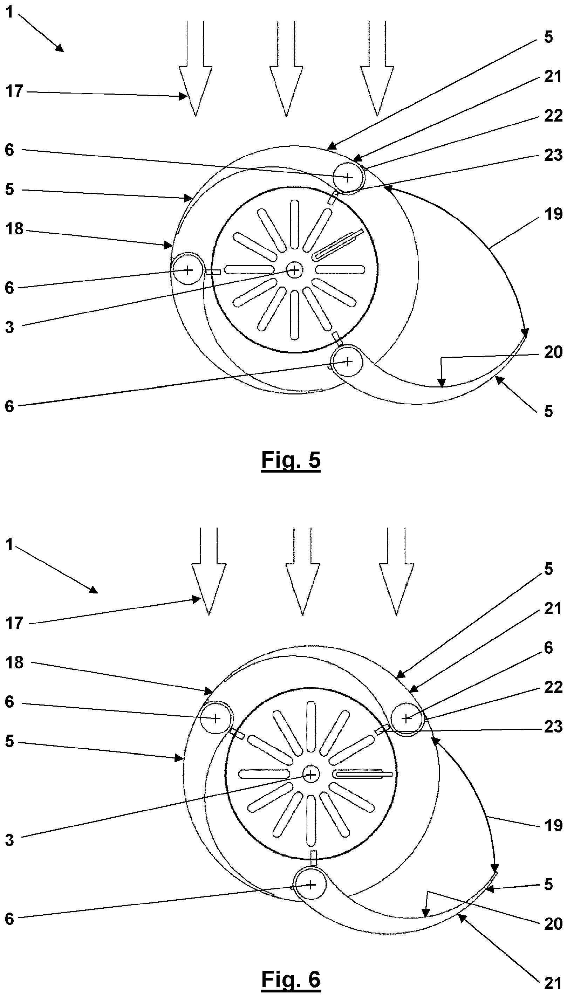

**Fig. 5****,** die den ausgeschwenkten Schwenkflügel 5 mit seiner Schwenkachse 6 auf 5 Uhr zeigt, gibt diese Querstellung des Schwenkflügels 5 zu der Strömung 17 schon fast wieder. In **Fig. 6****,** die den ausgeschwenkten Schwenkflügel 5 mit seiner Schwenkachse 6 auf 6 Uhr zeigt, ist diese Querstellung des Schwenkflügels 5 zu der Strömung 17 erreicht. Dabei ist der Schwenkwinkel 19, um den der Schwenkflügel 5 aus dem Rotor 4 ausgeschwenkt ist, gegenüber Fig. 5 bereits wieder verringert, um die Drehbewegung des Schwenkflügels 5 mit dem Rotor 4 um die Drehachse 3 auszugleichen. Diese Verringerung des Schwenkwinkels 19 gegen die Strömung 17 erfordert das Aufbringen eines Drehmoments um die Schwenkachse 6 mit der zugehörigen elektrischen Maschine 7. Die hierfür benötigte elektrische Energie wird aus dem Energiepufferspeicher 8 entnommen, der zuvor beim Abbremsen der Vergrößerung des Schwenkwinkels 19 unter Betrieb der elektrischen Maschine als Generator aufgeladen wurde. Das Verringern des Schwenkwinkels 19, um den ausgeschwenkten Schwenkflügel 5 quer zu der Strömung 17 auszurichten, bedeutet zugleich eine Ruderbewegung des Schwenkflügels 5 gegenüber dem Rotor 4 in der Strömung 17, die beschleunigend auf den Rotor 4 wirkt. So kann in dem Energiepufferspeicher 8 zwischengespeicherte elektrische Energie auf den Rotor 4 übertragen werden. Wenn sich der Energiepufferspeicher 8 trotz dieses Energieübertrags seiner Kapazitätsgrenze nähert, kann weitere elektrische Energie mittels des Elektromotors 27 gemäß Fig. 2 übertragen werden. Umgekehrt kann der Energiepufferspeicher 8, wenn droht, dass er sich völlig entleert, durch einen Betrieb des Elektromotors 27 als Generator wieder aufgeladen werden.

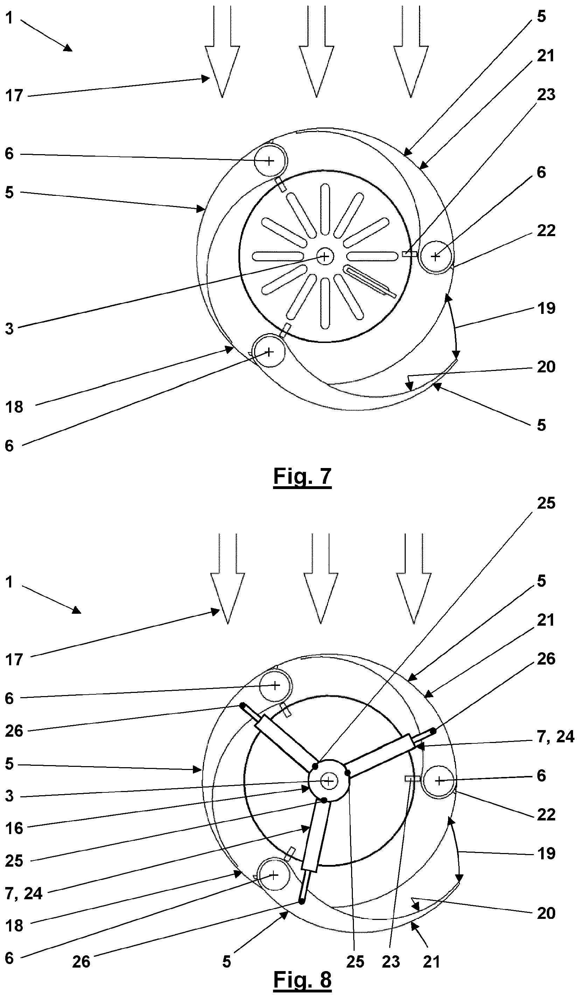

Auch in **Fig. 7****,** die den ausgeschwenkten Schwenkflügel 5 mit seiner Schwenkachse 6 auf 7 Uhr zeigt, ist der Schwenkflügel 5 noch im Wesentlichen quer zu der Strömung 17 ausgerichtet. Dazu ist der Schwenkwinkel 19 gegenüber Fig. 6 mit Hilfe der zugehörigen elektrischen Maschine 7 weiter deutlich verkleinert worden. Mit Annäherung der Schwenkachse 6 an 9 Uhr wird der zuvor ausgeschwenkte Schwenkflügel 5 wieder vollständig in die Grundform 18 des Rotors 4 eingeschwenkt. Allenfalls an seinem Ende wird dieses Einschwenken bei der erfindungsgemäßen Strömungskraftanlage 1 durch die auf die Außenseite 21 des Schwenkflügels 5 einwirkende Strömung 17 unterstützt. Dies gilt zumindest für das in den Fig. 3 bis 7 dargestellte Verschwenken des Schwenkflügels 5.

Eine automatische Optimierung dieses Verschwenkens kann zur Folge haben, dass der Schwenkflügel 5 zu einem stärkeren Anteil durch Einwirken der Strömung 17 eingeschwenkt wird, während sich seine Schwenkachse 6 irgendwo im Bereich zwischen 8 und 11 Uhr befindet. Die automatische Optimierung kann auch zur Folge haben, dass der jeweilige Schwenkflügel 5 zu Beginn seines Ausschwenkens, d. h. bereits bei Stellung seiner Schwenkachse 6 bei etwa 3 Uhr, so weit ausgeschwenkt wird, dass ein Anschlag 22 an dem Schwenkflügel 5 an einen Gegenanschlag 23 an dem Rotor 4 anschlägt. Dabei kann dieses Anschlagen mit Hilfe der als Generator betriebenen zugehörigen elektrischen Maschine 7 abgebremst werden. Bei dem Verschwenken des Schwenkflügels 5 gemäß den Fig. 3 bis 7 schlagen die Anschläge 22 bis 23 nicht aneinander an.

Der Verlauf des Schwenkwinkels 19 über den Umlauf der Schwenkachse 6 des jeweiligen Schwenkflügels 5 um die Drehachse 3 wird von der Steuerung 10 der Strömungskraftanlage 1 durch Ansteuern der jeweiligen elektrischen Maschine 7 grundsätzlich frei vorgegeben. Praktisch erfolgt die Vorgabe mit dem Ziel einer Maximierung des Energieübertrags aus der Strömung 17 auf den Rotor 4. Hierzu verwendet die Steuerung 10 während früherer Umläufe des Rotors 4 um die Drehachse 3 gewonnene Daten zu dem Schwenkwinkel 19 und der resultierenden, von dem Hauptgenerator 13 gemäß den Fig. 1 und 2 an einen Verbraucher oder Energiespeicher abgegebenen elektrischen Energie unter Berücksichtigung von Richtung und Stärke der anströmenden Strömung 17.

Während die anströmende Strömung 17 den Schwenkflügel 5 ausklappt, liefert der Hauptgenerator 13 den maximal einstellbaren Strom. Der Schwenkflügel erreicht die maximale Bewegungsgeschwindigkeit und wird dabei durch die als Generator betriebene zugehörige elektrische Maschine 7 abgebremst. Der Übergang zur Ruderbewegung geht mit einer Richtungsumkehr der Schwenkbewegung des Schwenkflügels 5 gegenüber dem Rotor 4 einher. Die jetzt als Motor betriebene zugehörige elektrische Maschine 7 treibt diese Bewegung an. Für den Übergang ist es optimal, wenn der Schwenkflügel 5 gegenüber dem Rotor 4 zum Stillstand kommt, bevor die Richtung der Ströme in der elektrischen Maschine 7 invertiert werden, um diese als Motor zu betreiben. Um den Stillstand zu begünstigen, wird der vom Hauptgenerator 13 fließende Strom abgeschaltet, um den Rotor 4 in einen Leerlauf zu versetzen. Dadurch sinkt der Druck der anströmenden Strömung 17 auf den Schwenkflügel 5. Sobald der Strom in der als Motor betriebenen elektrischen Maschine 7 eingeschaltet ist, wird auch der von dem Hauptgenerator 13 fließende Strom nach Vorgabe der Steuerung 10 wieder eingeschaltet. Der vorgegebene Verlauf des Schwenkwinkels 19 des Schwenkflügels 5 wird durch den Strom in der elektrischen Maschine 7 und durch den Strom von dem Hauptgenerator 13 gesteuert. Der Strom von dem Hauptgenerator 13 wird auch immer dann ausgeschaltet, wenn innerhalb eines Umlaufs keine elektrische Energie aus der anströmenden Strömung 17 gewonnen wird. Das heißt, der von dem Hauptgenerator 13 fließende Strom wird als Steuergröße verwendet.

**Fig. 8** zeigt eine andere Ausführungsform der Strömungskraftanlage 1, bei der die elektrischen Maschinen 7 zum Aufbringen von Drehmomenten auf die Schwenkflügel 5 um deren Schwenkachsen 6 gegenüber dem Rotor 4 keine rotierende elektrischen Maschinen sind, wie sie in Fig. 1 dargestellt sind, sondern Linearmotoren 24. Die Linearmotoren 24 sind jeweils um weitere Schwenkachsen 25 und 26, die parallel zu der Drehachse 3 und der Schwenkachsen 6 verlaufen, verschwenkbar an dem Rotor 4 und einem der Schwenkflügel 5 gelagert. Ein Expandieren der Linearmotoren 24 zwischen den Schwenkachsen 25 und 26 schwenkt die Schwenkflügel 5 aus dem Rotor 4 heraus, wobei der jeweilige Schwenkwinkel 19 ausgehend von null vergrößert wird. Ein Kontrahieren der Linearmotoren 24 führt zu einem Wiedereinschwenken der Schwenkflügel 5 in den Rotor 4, wobei der jeweilige Schwenkwinkel 19 wieder gegen null verkleinert wird. Die Anschlusswelle 16 führt zu dem bei der Strömungskraftanlage 1 gemäß Fig. 8 über dem Rotor 4 angeordneten (aber nicht dargestellten) Hauptgenerator 13.

Alle erfindungsgemäßen Strömungskraftanlagen sind mit der Drehachse 3 ihres Rotors 4 so auszurichten, dass ihre maximal ausgeschwenkten Schwenkflügel 5 möglichst vollflächig angeströmt werden. Beispielsweise kann es daher für eine Wasserkraftanlage in einem Strömungskanal mit größerer Breite als Höhe sinnvoll sein, die Drehachse 3 horizontal quer zu der anströmenden Strömung auszurichten. Die erfindungsgemäße Strömungskraftanlage ist dazu geeignet, freistehend in einer anströmenden Strömung betrieben zu werden, die ihren Rotor über dessen gesamten Querschnitt grundsätzlich gleich anströmt. Dies ist jedoch keine Voraussetzung für den sinnvollen Einsatz der erfindungsgemäßen Strömungskraftanlage. Die Steuerung der erfindungsgemäßen Strömungskraftanlage kann deren Betrieb auch dann optimieren, wenn ihr Rotor auf seiner Seite, auf der die Schwenkflügel entgegen der Strömung zurücklaufen, weniger stark bis gar nicht angeströmt wird. Dabei mag die automatische Optimierung des Verlaufs der Schwenkwinkel der Schwenkflügel zu anderen Ergebnissen führen als bei über deren gesamten Querschnitt gleichmäßig angeströmtem Rotor.

In den Fig. 3 bis 8 ist jeweils nur einer der Schwenkwinkel 19 eines der drei Schwenkflügel 5 von null verschieden dargestellt, weil nur der Verlauf des Schwenkwinkels 19 dieses einen Schwenkflügels 5 näher betrachtet wird. Dies bedeutet jedoch nicht, dass nicht die Schwenkwinkel 19 mehrere Schwenkflügel 5 gleichzeitig von null verschieden sein können. Ganz im Gegenteil werden regelmäßig die Schwenkwinkel 19 von mindestens zwei der Schwenkflügel 5 einer erfindungsgemäßen Strömungskraftanlage 1 mit drei oder mehr Schwenkflügeln 5 gleichzeitig größer als null sein.

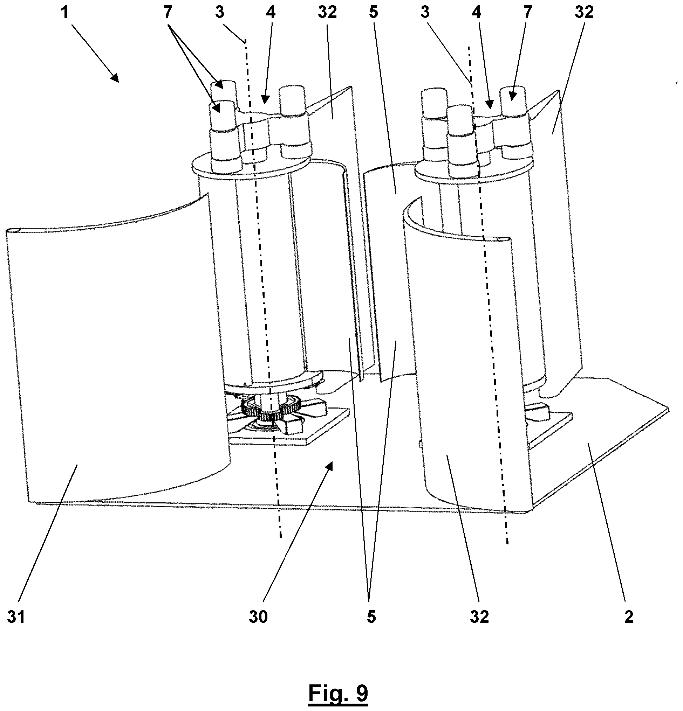

Die in **Fig. 9** dargestellte Ausführungsform der erfindungsgemäßen Strömungskraftanlage 1 weist zwei Rotoren 4 in spiegelsymmetrischer Anordnung zu einer Längsmittelebene eines Strömungskanals 30 auf. Der Strömungskanal 30 ist durch Strömungsleitelemente 31 und 32 definiert. Die Drehachsen 3 der Rotoren 4 sind beiderseits des Strömungskanals 30 parallel zueinander angeordnet. Der Abstand der Drehachsen 3 ist dabei so groß, dass die vollständig ausgeschwenkten Schwenkflügel 5 an den gegenläufig um ihre Drehachsen 3 rotierenden Rotoren 4 auch genau dann gerade nicht miteinander kollidieren, wenn sie gleichzeitig zwischen den Drehachsen 3 hindurch laufen. Das hat zur Folge, dass die vollständig ausgeschwenkten Schwenkflügel 5 den Strömungskanal 30 vorübergehend nahezu vollständig blockieren. Eine Strömung durch den Strömungskanal 30 staut sich dann an den Schwenkflügeln 5 und übt ein hohes Drehmoment auf die Rotoren 4 um deren Drehachsen 3 aus. Strömungsleitelemente 31 oder 32, die einen Teil des Rotors 4 gegenüber der Strömung 17 abschirmen, können auch bei Strömungskraftanlagen 1 mit nur einem Rotor 4 vorgesehen werden, um die Anströmung des Rotors auf seiner entgegen der Strömung 17 zurück laufenden Seite zu reduzieren und auf seiner mit der Strömung 17 vorlaufenden Seite zu erhöhen.

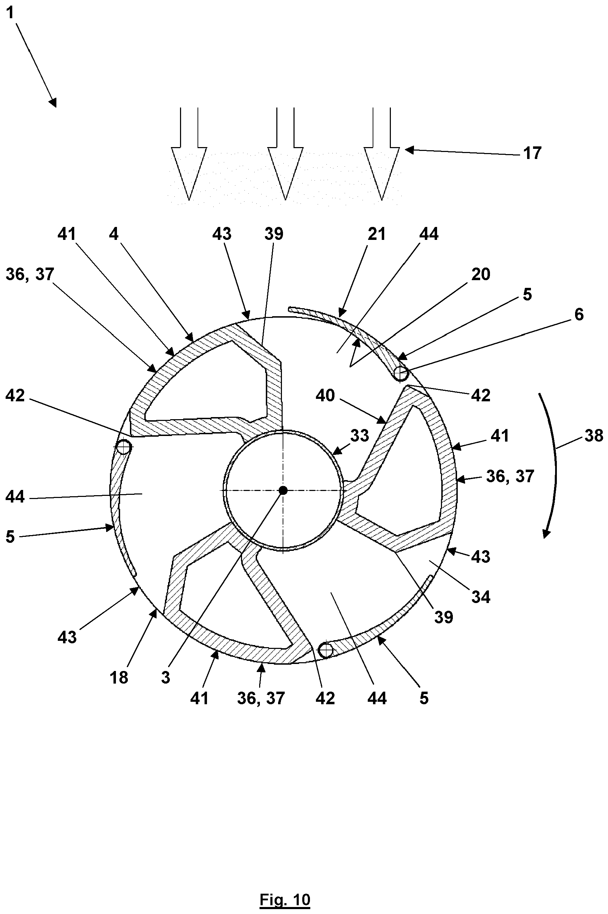

Bei den Ausführungsformen der Strömungskraftanlage 1 gemäß den bisherigen Figuren weist der Rotor 4 einen Innenzylinder 33 zwischen starr mit dem Innenzylinder verbundenen Endscheiben 34 und 35 auf, wobei die Schwenkflügel 5 um ihre Schwenkachsen 6 verschwenkbar zwischen den Endscheiben 34 und 35 gelagert sind. Bei der in **Fig. 10** in einer Fig. 3 entsprechenden Ansicht dargestellten Ausführungsform der Strömungskraftanlage 1 weist der Rotor 4 neben dem Innenzylinder 33 und den Endscheiben 34 und 35 zusätzliche Strömungskörper 36 auf. Die Strömungskörper 36 sind rotationssymmetrisch zu der Drehachse 3 um den Innenzylinder 33 herum angeordnet. Sie sind hier jeweils als Hohlprofilabschnitte 37 geringer Masse und hoher Steifigkeit ausgebildet und weisen eine in einer Drehrichtung 38 des Rotors 4 nach vorne zeigende Vorderseite 39 und eine der Drehrichtung 38 abgekehrte Hinterseite 40 auf. Die Strömungskörper 36 sind als starre Flügel des Rotors 4 ausgeformt. Aufgrund der Anströmung der Strömungskörper 36 durch die Strömung 17 quer zur Drehachse 3 würde der Rotor 4 daher auch ohne die Schwenkflügel 5 in Rotation in der Drehrichtung 38 versetzt. An dem Außenumfang der zylindrischen Grundform 18, der mit dem Außenumfang der Endscheiben 34 und 35 zusammenfällt, erstrecken sich die Strömungskörper 36 zwischen ihren Vorderseiten 39 und Hinterkanten 42 ihrer Hinterseiten 40 über hier gut 50° um die Drehachse 3. Im Bereich der Hinterkanten 42 und parallel zu diesen verlaufen die Schwenkachsen 6 der Schwenkflügel 5, die sich längs des Außenumfangs der Grundform 18 hier über jeweils 45° erstrecken. So enden auch die vollständig eingeschwenkten Schwenkflügel 5 entgegen der Drehrichtung 38 in einem Abstand zu der Vorderseite 39 des folgenden Strömungskörpers 6. Dadurch verbleiben Öffnungen 43, die in Kammern 44 im Inneren des Rotors 4 führen. Der in die Kammern 44 einströmende Teil der Strömung 17 unterstützt das Aufschwenken der Schwenkflügel 5, solange diese mit ihren Außenseiten 21 noch der Strömung 17 zugekehrt sind. Die Breite der Öffnungen 43 zwischen den eingeschwenkten Schwenkflügeln 5 und den Vorderseiten 39 der Strömungskörper 36 beträgt hier etwa 15° um die Drehachse 3.

Kleinere Öffnungen 43 und Kammern 44 sind auch bei den Ausführungsformen der Strömungskraftanlage 1 gemäß den Figuren 1 bis 9 vorhanden, siehe dazu die Bezugszeichen in Fig. 3.

### BEZUGSZEICHENLISTE

- 1: Strömungskraftanlage
- 2: Basis
- 3: Drehachse
- 4: Rotor
- 5: Schwenkflügel
- 6: Schwenkachse
- 7: elektrische Maschine
- 8: Energiepufferspeicher
- 9: Teil der Steuerung
- 10: Steuerung
- 11: Teil der Steuerung
- 12: Drehlager
- 13: Hauptgenerator
- 14: Drehwinkelgeber
- 15: Drehwinkelgebe
- 16: Anschlusswelle
- 17: Strömung
- 18: Grundform
- 19: Schwenkwinkel
- 20: Innenseite des Schwenkflügels 5
- 21: Außenseite des Schwenkflügels 5
- 22: Anschlag am Schwenkflügel 5
- 23: Gegenanschlag am Rotor 4
- 24: Linearmotor
- 25: Schwenkachse
- 26: Schwenkachse
- 27: Motor
- 28: Ritzel
- 29: Zahnkranz
- 30: Strömungskanal
- 31: Strömungsleitelement
- 32: Strömungsleitelement
- 33: Innenzylinder
- 34: Endscheibe
- 35: Endscheibe
- 36: Strömungskörper
- 37: Hohlprofilabschnitt
- 38: Drehrichtung
- 39: Vorderseite
- 40: Rückseite
- 41: Flügel
- 42: Hinterkante
- 43: Öffnung
- 44: Kammer

## Patentansprüche

1. Strömungskraftanlage (1) mit
- einem um eine Drehachse (3) drehbar gelagerten Rotor (4),
- mehreren Schwenkflügeln (5), die jeweils um eine zu der Drehachse (3) parallele Schwenkachse (6) zwischen einer zu der Drehachse (3) hin eingeschwenkten Stellung und einer von der Drehachse (3) weg ausgeschwenkten Stellung verschwenkbar an dem Rotor (4) gelagert und die mit Hilfe einer zwischen dem mindestens einen Schwenkflügel (5) und dem Rotor (4) wirksamen elektrischen Maschine (7) um die Schwenkachse (6) verschwenkbar sind, und
- einer die elektrische Maschine (7) ansteuernden Steuerung (10) für einen Schwenkwinkel (19) des jeweiligen Schwenkflügels (5) um die Schwenkachse (6) gegenüber dem Rotor (4),
- wobei jedem der Schwenkflügel (5) eine separate elektrische Maschine (7) zugeordnet ist, die dazu ausgebildet und angeordnet ist, Drehmomente um die Schwenkachse (6) zwischen dem Rotor (4) und dem jeweiligen Schwenkflügel (5) aufzubringen,
- wobei die separaten elektrischen Maschinen (7) unabhängig voneinander von der Steuerung (10) ansteuerbar sind und
- wobei die Steuerung (10) dazu ausgebildet und angeschlossen ist, jede separate elektrische Maschine (7) während jedes Umlaufs des jeweiligen Schwenkflügels (5) mit dem Rotor (4) um die Drehachse (3) so anzusteuern, dass ein für den jeweiligen Umlauf vorgesehener Verlauf des Schwenkwinkels (19) des jeweiligen Schwenkflügels (5) zwischen der eingeschwenkten Stellung und der ausgeschwenkten Stellung resultiert,
**dadurch gekennzeichnet, dass** die separaten elektrischen Maschinen (7) jeweils als Motor und als Generator betreibbar sind.

2. Strömungskraftanlage (1) nach Anspruch 1, **wobei** die Steuerung (10) dazu ausgebildet ist, den Verlauf des Schwenkwinkels (19) automatisch zu optimieren.

3. Strömungskraftanlage (1) nach Anspruch 2, **wobei** die Optimierung mit dem Ziel einer maximalen Übertragung von Energie aus einer den Rotor (4) quer zu seiner Drehachse (3) anströmenden Strömung (17) auf den Rotor (4) erfolgt, wobei die Optimierung optional auf Grundlage
- der Energien, die während vorheriger Umläufe des Schwenkflügels (5) mit dem Rotor (4) um die Drehachse (3) auf den Rotor (4) übertragen wurden,
- der Werte von Strömungsparametern der den Rotor (4) während dieser Umläufe anströmenden Strömung (17) und
- der dabei resultierenden Verläufe des Schwenkwinkels (19) erfolgt.

4. Strömungskraftanlage (1) nach einem der vorhergehenden Ansprüche, **wobei** die Steuerung (10) an einen Schwingungssensor der Strömungskraftanlage (1) angeschlossen und dazu ausgebildet ist, die separaten elektrischen Maschinen (7) derart unterschiedlich anzusteuern, dass mit dem Schwingungssensor registrierte Schwingungen bei der Drehfrequenz oder einer Harmonischen der Drehfrequenz des Rotors (4) abgemindert werden.

5. Strömungskraftanlage (1) nach einem der vorhergehenden Ansprüche, **wobei** die separaten elektrischen Maschinen (7) jeweils einen elektrischen Linearmotor (24) aufweisen.

6. Strömungskraftanlage (1) nach einem der vorhergehenden Ansprüche, **wobei** ein an dem Rotor (4) gelagerter und mit dem Rotor (4) um die Drehachse (3) umlaufender Energiepufferspeicher (8) dazu ausgebildet und angeschlossen ist, beim Betrieb der separaten elektrischen Maschinen (7) als Generator gewonnene elektrische Energie zwischenzuspeichern.

7. Strömungskraftanlage (1) nach Anspruch 6, **wobei** ein Elektromotor (27) an dem Rotor (4) gelagert ist, mit dem Drehmomente um die Drehachse (3) zwischen dem Rotor (4) und einer drehfesten Basis (2) aufbringbar sind, wobei die Steuerung (10) dazu ausgebildet ist, den Elektromotor (27) mit elektrischer Energie aus dem Energiepufferspeicher (8) zu betreiben.

8. Strömungskraftanlage (1) nach einem der vorhergehenden Ansprüche, **wobei** die Steuerung (10) dazu ausgebildet ist, die separaten elektrischen Maschinen (7) zum derartigen Verschwenken des jeweiligen Schwenkflügels (5) aus seiner ausgeschwenkten Stellung in seine eingeschwenkte Stellung anzusteuern, dass der Rotor (4) durch eine resultierende Ruderbewegung des jeweiligen Schwenkflügels (5) in der ihn anströmenden Strömung (17) beschleunigt wird.

9. Strömungskraftanlage (1) nach einem der vorhergehenden Ansprüche, **wobei** der Rotor (4) mechanisch an einen Hauptgenerator (13) der Strömungskraftanlage (1) angeschlossen ist, an den ein elektrischer Verbraucher und/oder ein Energiespeicher für elektrische Energie angeschlossen oder anschließbar sind/ist, wobei die Steuerung (10) optional dazu ausgebildet und angeschlossen ist, eine von dem Hauptgenerator (13) an den Verbraucher und/oder den Energiespeicher abgegebene elektrische Leistung zu erfassen.

10. Strömungskraftanlage (1) nach Anspruch 9, **wobei** die Steuerung (10) dazu ausgebildet und angeschlossen ist, den Hauptgenerator (13) anzusteuern, um eine Winkelgeschwindigkeit des Rotors (4) um die Drehachse (3) zu optimieren.

11. Strömungskraftanlage (1) nach Anspruch 9 oder 10, **wobei** der Hauptgenerator (13) umkehrbar ist, um ihn als Drehantrieb für den Rotor (4) zu verwenden.

12. Strömungskraftanlage (1) nach einem der vorhergehenden Ansprüche, **mit** 3 bis 6 Schwenkflügel (5), denen jeweils eine der separaten elektrischen Maschinen (7) zugeordnet ist.

13. Strömungskraftanlage (1) nach einem der vorhergehenden Ansprüche, **wobei** der Rotor (4) einen koaxial zu seiner Drehachse (3) angeordneten Innenzylinder (33) und mehrere um den Innenzylinder (33) herum angeordnete Strömungskörper (36) mit in Drehrichtung (38) des Rotors (4) um die Drehachse (3) gewandten Vorderseiten (39) und der Drehrichtung abgewandten Rückseiten (40) aufweist, die als starre Flügel (41) des Rotors (4) wirksam sind, wobei die Schwenkachsen (6) der Schwenkflügel (5) im Bereich von bezüglich der Drehachse (3) radial außenliegenden Hinterkanten (42) der Strömungskörper (36) und parallel zu diesen verlaufen.

14. Strömungskraftanlage (1) nach Anspruch 13, **wobei** die Schwenkflügel (5) in ihren zu der Drehachse (3) hin eingeschwenkten Stellungen in Umfangsrichtung um die Drehachse (3) in Abständen von mindestens 10° vor den Vorderseiten (39) der folgenden Strömungskörper (36) enden, so dass Öffnungen (43) zwischen dem jeweiligen Schwenkflügel (5) und der Vorderseite (39) des folgenden Strömungskörpers (36) verbleiben.

15. Strömungskraftanlage (1) nach einem der vorhergehenden Ansprüche, **mit** zwei Rotoren (4) mit Drehflügeln (5), die spiegelsymmetrisch zu einer Längsmittelebene eines Strömungskanals (30) angeordnet sind und gegenläufig um ihre Drehachsen (3) umlaufen, wobei der Strömungskanal (30) optional durch Strömungsleitelemente (31, 32) begrenzt ist und/oder durch Ausschwenken der Schwenkflügel (5) in ihre ausgeschwenkten Stellungen zumindest überwiegend blockierbar ist.

## Claims

1. Flow power plant (1) comprising
- a rotor (4) mounted for rotation about a rotation axis (3),
- a plurality of pivoting blades (5) which are each mounted to the rotor (4) for pivoting about a pivoting axis (6) which is parallel to the rotation axis (3) between a position pivoted-in towards the rotation axis (3) and a position pivoted-out away from the rotation axis (3), and which are each pivotable about the pivoting axis (6) by means of an electric machine (7) operative between the at least one pivoting blade (5) and the rotor (4), and
- a controller (10) for a pivot angle (19) of the respective pivoting blade (5) around the pivoting axis (6) with respect to the rotor (4), the controller (10) controlling the electric machine (7),
- wherein a separate electric machine (7), which is configured and arranged for applying torques around the pivoting axis (6) between the rotor (4) and the respective pivoting blade (5), is assigned to each of the pivoting blades (5),
- that the separate electric machines (7) are controllable by the controller (10) independently of one another, and
- that the controller (10) is configured and connected for controlling each separate electric machine (7) during each revolution of the respective pivoting blade (5) together with the rotor (4) around the rotation axis (3) in such a way that a course of the pivot angle (19) of the respective pivoting blade (5) between the pivoted-in position and the pivoted-out position, that is intended for the respective revolution, is resulting,
**characterized in that** the separate electric machines (7) are each operable as a motor and as a generator.

2. Flow power plant (1) of claim 1, **wherein** the controller (10) is configured for automatically optimizing the course of the pivot angle (19).

3. Flow power plant (1) of claim 2, **wherein** the optimization is made with the objective of a maximum transfer of energy from a flow (17) flowing against the rotor (4) transversely to its rotation axis (3) onto the rotor (4), wherein the optimization is optionally made on basis
- of energies which have been transferred onto the rotor (4) during previous revolutions of the pivoting blades (5) together with the rotor (4) around the rotating axis (3),
- of the values of flow parameters of the flow (17) flowing against the rotor (4) during these revolutions, and
- of the courses of the pivot angles (19) resulting therein.

4. Flow power plant (1) of any of the preceding claims, **wherein** the controller (10) is connected to a vibration sensor of the flow power plant (1) and configured for controlling the separate electric machines (7) differently in such a way that vibrations registered by the vibration sensor are reduced at the rotation frequency or a harmonic of the rotation frequency of the rotor (4).

5. Flow power plant (1) of any of the preceding claims, **wherein** the separate electric machines (7) each comprise a linear motor (24).

6. Flow power plant (1) of any of the preceding claims, **wherein** an energy buffer storage (8) mounted to the rotor (4) and rotating together with the rotor (4) about the rotation axis (3) is configured and connected for temporarily storing electric energy recovered in operating the separate electric machines (7) as generators.

7. Flow power plant (1) of claim 6, **wherein** an electro motor (27) is mounted to the rotor (4), by which torques around the rotation axis (3) are applicable between the rotor (4) and a rotationally fixed basis (2), wherein the controller (10) is configured for operating the electro motor (27) with electric energy out of the energy buffer storage (8).

8. Flow power plant (1) of any of the preceding claims, **wherein** the controller (10) is configured for controlling the separate electric machines (7) for pivoting the respective pivoting blades (5) out of its pivoted-out position into its pivoted-in position in such a way that the rotor (4) is accelerated due to a resulting rudder-movement of the respective pivoting blade (5) in the flow (17) flowing against it.

9. Flow power plant (1) of any of the preceding claims, **wherein** the rotor (4) is mechanically connected to a main generator (13) of the flow power plant (1) to which an electric load and/or an energy storage for electric energy is connected or connectable, wherein the controller (10) is optionally configured and connected for registering an electric power supplied by the main generator (13) to the load and/or the energy storage.

10. Flow power plant (1) of claim 9, **wherein** the controller (10) is configured and connected for controlling the main generator (13) such as to optimize an angular velocity of the rotor (4) around the rotation axis (3).

11. Flow power plant (1) of claim 9 or 10, **wherein** the main generator (13) is reversible for using it as a rotation drive for the rotor (4).

12. Flow power plant (1) of any of the preceding claims, **comprising** 3 to 6 pivoting blades (5), one of the separate electric machines (7) being assigned to each of the 3 to 6 pivoting blades (5).

13. Flow power plant (1) of any of the preceding claims, **wherein** the rotor (4) comprises an inner cylinder (33) coaxially arranged with respect to the rotation axis (3) and a plurality of flow bodies (36) arranged around the inner cylinder (33) and comprising front sides (39) directed into the rotation direction (38) of the rotor (4) around the rotation axis (3) and back sides (40) facing against the rotation direction, which are operative as fixed blades (41) of the rotor (4), wherein the pivoting axes (6) of the pivoting blades (5) run in an area of trailing edges (42) of the flow bodies (36) and parallel thereto, the trailing edges (42) being positioned radially outward with respect to the rotation axis (3).

14. Flow power plant (1) of claim 13, **wherein** the pivoting blades (5), in their positions pivoted-in towards the rotation axis (3), are arranged in circumferential direction around the rotation axis (3) at distances of at least 10° in front of the front side (39) of the following flow body (36) such that openings (43) remain between the respective pivoting blade (5) and the front side (39) of the following flow body (36).

15. Flow power plant (1) of any of the preceding claims, **comprising** two rotors (4) having pivoting blades (5) which are mirror-symmetrically arranged with respect to a longitudinal center plane of a flow channel (30) and rotate about their rotating axes (3) in opposite directions, wherein the flow channel (30) is optionally delimited by flow guiding elements (31, 32) and/or at least predominantly blockable by pivoting-out the pivoting blades (5) into their pivoted-out positions.

## Revendications

1. Installation de force d'écoulement (1) avec
un rotor (4) monté de manière à pouvoir tourner autour d'un axe de rotation (3),
plusieurs pales pivotantes (5) qui sont montées sur le rotor (4) de manière à pouvoir pivoter autour d'un axe de pivotement (6) parallèle à l'axe de rotation (3) entre une position pivotée vers l'intérieur de l'axe de rotation (3) et une position pivotée vers l'extérieur de l'axe de rotation (3), et qui peuvent pivoter autour de l'axe de pivotement (6) à l'aide d'une machine électrique (7) qui agit entre au moins une pale pivotante (5) et le rotor (4), et
une commande (10) qui commande la machine électrique (7) pour un angle de pivotement (19) de la pale pivotante (5) respective autour de l'axe de pivotement (6) par rapport au rotor (4),
une machine électrique distincte (7) étant associée à chacune des pales pivotantes (5), laquelle est conçue et agencée pour appliquer des couples autour de l'axe de pivotement (6) entre le rotor (4) et la pale pivotante (5) respective,
les machines électriques distinctes (7) pouvant être commandées indépendamment les unes des autres par la commande (10) et
la commande (10) étant conçue et raccordée de manière à commander chaque machine électrique distincte (7) pendant chaque rotation de la pale pivotante (5) respective avec le rotor (4) autour de l'axe de rotation (3), de telle sorte qu'il en résulte une courbe prévue pour la rotation respective de l'angle de pivotement (19) de la pale pivotante (5) respective, entre la position pivotée vers l'intérieur et la position pivotée vers l'extérieur,
**caractérisée en ce que** les machines électriques distinctes (7) peuvent être utilisées respectivement comme moteur et comme générateur.

2. Installation de force d'écoulement (1) selon la revendication 1, dans laquelle la commande (10) est conçue pour optimiser automatiquement la trajectoire de l'angle de pivotement (19).

3. Installation de force d'écoulement (1) selon la revendication 2, l'optimisation étant effectuée aux fins d'une transmission maximale d'énergie au rotor (4) à partir d'un flux (17) affluant vers le rotor (4) transversalement à son axe de rotation (3), l'optimisation étant effectuée, en option, sur la base
- des énergies transmises au rotor (4) pendant les rotations précédentes de la pale pivotante (5) avec le rotor (4) autour de l'axe de rotation (3),
- des valeurs des paramètres d'écoulement du flux (17) arrivant sur le rotor (4) pendant ces rotations et des variations de l'angle de pivotement (19) qui en résultent.

4. Installation de force d'écoulement (1) selon l'une des revendications précédentes, dans laquelle la commande (10) est raccordée à un capteur de vibrations de l'installation de force d'écoulement (1) et est conçue pour commander les machines électriques distinctes (7) de manière différente de telle sorte que les vibrations enregistrées par le capteur de vibrations soient réduites à la fréquence de rotation ou à une harmonique de la fréquence de rotation du rotor (4).

5. Installation de force d'écoulement (1) selon l'une des revendications précédentes, dans laquelle les machines électriques distinctes (7) comprennent chacune un moteur électrique linéaire (24).

6. Installation de force d'écoulement (1) selon l'une des revendications précédentes, dans laquelle un accumulateur de réserve d'énergie (8) monté sur le rotor (4) et tournant avec le rotor (4) autour de l'axe de rotation (3) est conçu et raccordé pour stocker temporairement l'énergie électrique produite par les machines électriques distinctes (7) lorsqu'elles fonctionnent comme générateur.

7. Installation de force d'écoulement (1) selon la revendication 6, dans laquelle un moteur électrique (27) est monté sur le rotor (4), avec lequel des couples peuvent être appliqués autour de l'axe de rotation (3) entre le rotor (4) et une base fixe (2), la commande (10) étant conçue pour faire fonctionner le moteur électrique (27) avec de l'énergie électrique provenant de l'accumulateur de réserve d'énergie (8).

8. Installation de force d'écoulement (1) selon l'une des revendications précédentes, la commande (10) étant conçue pour commander les machines électriques distinctes (7) afin de faire pivoter la pale pivotante respective (5) de sa position pivotée vers l'extérieur de telle sorte que le rotor (4) soit accéléré par un mouvement de gouvernail résultant de la pale pivotante respective (5) dans le flux (17) qui le traverse.

9. Installation de force d'écoulement (1) selon l'une des revendications précédentes, dans laquelle le rotor (4) est raccordé mécaniquement à un générateur principal (13) de l'installation de force d'écoulement (1), auquel un récepteur électrique et/ou un accumulateur d'énergie électrique
sont/peuvent être raccordés, la commande (10) étant éventuellement conçue et raccordée pour détecter une puissance électrique fournie par le générateur principal (13) au récepteur et/ou à l'accumulateur d'énergie.

10. Installation de force d'écoulement (1) selon la revendication 9, dans laquelle la commande (10) est conçue et raccordée pour commander le générateur principal (13) afin d'optimiser la vélocité angulaire du rotor (4) autour de l'axe de rotation (3).

11. Installation de force d'écoulement (1) selon la revendication 9 ou 10, le générateur principal (13) étant réversible afin de pouvoir être utilisé comme entraînement rotatif pour le rotor (4).

12. Installation de force d'écoulement (1) selon l'une des revendications précédentes, avec 3 à 6 pales pivotantes (5), à chacune desquelles est associée l'une des machines électriques distinctes (7).

13. Installation de force d'écoulement (1) selon l'une des revendications précédentes, le rotor (4) présentant un cylindre intérieur (33) agencé coaxialement à son axe de rotation (3) et plusieurs corps d'écoulement (36) étant agencés autour du cylindre intérieur (33) avec les faces avant (39) tournées dans le sens de rotation (38) du rotor (4) autour de l'axe de rotation (3) et des faces arrière (40) opposées au sens de rotation, qui agissent comme des pales rigides (41) du rotor (4), les axes de pivotement (6) des pales pivotantes (5) s'étendant dans la zone des bords arrière (42) des corps d'écoulement (36) situés radialement à l'extérieur par rapport à l'axe de rotation (3) et parallèlement à ceux-ci.

14. Installation de force d'écoulement (1) selon la revendication 13, dans laquelle les pales pivotantes (5) se terminent, dans leurs positions pivotées vers l'axe de rotation (3), dans la direction circonférentielle autour de l'axe de rotation (3) à des intervalles d'au moins 10° devant les faces avant (39) des corps d'écoulement (36) suivants, de sorte qu'il reste des ouvertures (43) entre la pale pivotante (5) respective et la face avant (39) du corps d'écoulement (36) suivant.

15. Installation de force d'écoulement (1) selon l'une des revendications précédentes, avec deux rotors (4) avec des pales pivotantes (5), qui sont agencés de manière symétrique par rapport à un plan longitudinal médian d'un canal d'écoulement (30) et tournent en sens inverse autour de leurs axes de rotation (3), le canal d'écoulement (30) étant éventuellement délimité par des éléments de guidage d'écoulement (31, 32) et/ou pouvant être bloqué au moins en grande partie par le pivotement des pales pivotantes (5) dans leur position pivotée vers l'extérieur.
